# EUROPÄISCHE PATENTANMELDUNG

(11) **EP 3 945 110 A1**
(43) Veröffentlichungstag der Anmeldung: **02.02.2022**
(21) Anmeldenummer: 20188649.6
(22) Anmeldetag: 30.07.2020
(51) Int. Cl.: C08K 5/5313, C08K 3/013, C08K 3/34, C08K 5/134, C08K 5/29, C08K 5/3492, C08K 5/5393, C08L 67/00, C08L 75/04, C08L 77/00

(54) **FLAMMSCHUTZMITTEL-STABILISATOR-KOMBINATIONEN FÜR FLAMMWIDRIGE POLYMERE MIT VERBESSERTER HYDROLYSEBESTÄNDIGKEIT UND DEREN VERWENDUNG**

(71) Anmelder: Clariant International Ltd, 4132 Muttenz (CH)
(72) Erfinder: HÖROLD, Sebastian, 86368 Gersthofen (DE); LEUSCHNER, Eva Maria, 86368 Gersthofen (DE)
(74) Vertreter: Mikulecky, Klaus

(57) **Zusammenfassung**

Beschrieben werden Mischungen enthaltend als Komponente A ausgewählte Phosphinsäuresalze, als Komponente B polymere Carbodiimidverbindungen, und mindestens zwei der Komponenten C, D und/oder G, wobei Komponente C ein sterisch gehindertes Phenol, Komponente D ein organisches Phosphit oder Phosphonit und Komponente G ein Gleit- oder Entformungsmittel ist.

Die Mischungen können zur Herstellung von flammwidrig ausgerüsteten Zusammensetzungen thermoplastischer Polymere eingesetzt werden.

Diese Zusammensetzungen zeichnen sich durch eine gesteigerte Hydrolysebeständigkeit aus.

## Beschreibung

Die Erfindung betrifft Mischungen aus Flammschutzmittel, Addtitiven für Hydrolyse-schutz und weitere Zuschlagsstoffe für flammwidrige Polymere wie Polyester-, Polyurethan- und Polyamidcompounds mit verbesserten Brandeigenschaften, exzellenter Hydrolysebeständigkeit und guten mechanischen Eigenschaften sowie polymere Formmassen und Formkörper, die solche Flammschutzmittel-Additive-Kombinationen enthalten.

Aufgrund ihrer chemischen Zusammensetzung sind viele Kunststoffe leicht brennbar. Um die von Kunststoffverarbeitern und teilweise vom Gesetzgeber geforderten hohen Flammschutzanforderungen erreichen zu können, müssen Kunststoffe daher in der Regel mit Flammschutzmitteln ausgerüstet werden. Hierzu sind eine Vielzahl unterschiedlicher Flammschutzmittel und Flammschutzmittelsynergisten bekannt und auch kommerziell erhältlich.

Thermoplastische Polyester, Polyamide und Polyurethane werden aufgrund ihrer guten mechanischen und elektrischen Eigenschaften seit langem als Werkstoffe eingesetzt. Neben ihren thermischen und chemischen Eigenschaften gewinnt ihre Hydrolysestabilität zunehmend an Bedeutung. Beispiele hierfür sind Anwendungen im Elektronikbereich (z.B. Abdeckungen für Schutzschalter) und Automobilbereich (z. B. Stecker, Sensoren, Gehäuseteile). Bei den genannten Anwendungen ist eine verbesserte Stabilität bei Lagerungen in feucht warmem Klima gefordert.

Darüber hinaus besteht ein zunehmendes Marktinteresse an halogenfrei flammgeschützten Polymerformmassen. Hierbei sind die wesentlichen Anforderungen an das Flammschutzmittel eine helle Eigenfarbe, eine ausreichende Temperaturstabilität während der Polymerverarbeitung, sowie eine flammhemmende Wirksamkeit in verstärktem und unverstärktem Polymer. Flammgeschützte thermoplastische Polyesterformmassen besitzen jedoch in der Regel eine reduzierte Hydrolysebeständigkeit, da einerseits der Anteil an Polymermatrix reduziert ist und es andererseits auch zu negativen Wechselwirkungen zwischen Wasser, Flammschutzmittel und Polymermatrix sowie zu Wechselwirkungen zwischen Flammschutz- und Hydrolyseschutzadditiv kommen kann. Unter den halogenfreien Flammschutzmitteln haben sich für thermoplastische Polyester insbesondere die Salze von Phosphinsäuren (Phosphinate) als besonders wirksam erwiesen (DE-A-2 252 258 und DE-A-2 447 727). Calcium- und Aluminiumphosphinate sind in Polyestern als sehr effektiv beschrieben worden und beeinträchtigen die Materialeigenschaften der Polymerformmassen weniger als z. B. die Alkalimetallsalze (EP-A-0 699 708).

Darüber hinaus wurden synergistische Kombinationen von Phosphinaten mit verschiedenen stickstoffhaltigen Verbindungen gefunden, die in einer ganzen Reihe von Polymeren als Flammschutzmittel effektiver wirken als die Phosphinate allein (WO 97/39053 A1, DE-A-197 34 437, DE-A-197 37 727 und US-A-6,255,371).

Neben der Flammwidrigkeit müssen polymere Werkstoffe je nach Anwendung auch Lagerungen in Wasser oder in feucht-warmem Klima unter Erhalt zumindest eines Teils ihrer mechanischen Eigenschaften bestehen. Üblich sind zum Beispiel Lagerungen im Klimaschrank bei 85°C und 85% relativer Feuchte für 40 Tage. Zur Verbesserung der Hydrolysebeständigkeit von Polyestern, Polyurethanen und Polyamiden werden verschiedene Additive beschrieben, die aber häufig nicht zusammen mit Flammschutzmitteln eingesetzt werden können.

Die DE10359816 A1 beschreibt eine Flammschutz-Stabilisator Kombination für Polyester und Polyamide aus Phosphinaten und Kettenverlängerern, ausgewählt aus den Klassen der Bislactame, Bisoxazoline, Anhydriden mehrwertiger Carbonsäure und Epoxidverbindungen, um den durch Phosphinate verursachten Kettenabbau entgegenzuwirken. Die hier beschriebenen Verbindungen zeigen zwar eine Verringerung der Polymerabbaus beim Compoundieren, bringen aber keine signifikante Verbesserung der Hydrolyseeigenschaften der flammwidrigen Polymeren.

Die DE-AS-1285747 beschreibt die Verwendung von Polycarbodiimiden mit einem Molekulargewicht über 500 und einem Gehalt von mehr als drei Carbodiimidgruppen als stabilisierendes Mittel gegenüber Einflüssen von Wärme und Feuchtigkeit in estergruppenhaltigen Kunststoffen. Der Zusatz von Flammschutzmittel wird nicht beschrieben.

Die DE 19920276 A1 beschreibt thermoplastische Formmassen enthaltend ein thermoplastisches Polymer, eine Phosphorverbindung und eine Carbodiimid-Stabilisatorverbindung, wie z. B.

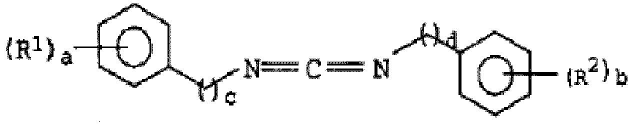

Als Phosphorverbindung werden in den Beispielen Resorcinol-bisdiphenylphosphat, als Stabilisatorverbindung wird z.B. Stabaxol P (Fa. Lanxess) 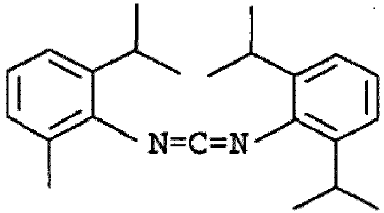 und als Polymer werden PBT und PET Mischungen beschrieben. Nachteilig an den beschriebenen Stabilisatorverbindungen ist ihre toxikologische Bedenklichkeit. So werden monomere Carbodiimide als krebserzeugend angesehen. Problematisch können auch Emissionen bei der Polymerverarbeitung (Compoundieren, Spritzgießen, Extrudieren) sein. Als vorteilhaft wird eine geringe Kupferkorrosion genannt. Hinweise auf eine Hydrolysebeständigkeit der beschriebenen Zusammensetzungen finden sich nicht.

Aus der WO 2004/069912 A1 und WO 2006/120184 A1 sowie US 7375167 B2 sind Polyesterformmassen mit epoxidierten natürlichen Ölen bekannt, die als Additive für die Hydrolysestabilität eingesetzt werden.

Aus JP01/221448 ist bekannt, dass halogenhaltige flammgeschützte Polyesterform-massen durch Zusatz von Epoxy-Verbindungen und Polyolefinen hydrolysestabilisiert werden können.

Die EP 2989153 B1 beschreibt die Verwendung von Polyesterformmassen, aufgebaut aus einem thermoplastischen Polyester, einem epoxidierten natürlichen Öl mit einem Epoxid-Äquivalentgewicht gemäß DIN EN ISO 3001 von 100 bis 400 g/Eq., einem Phosphinat und einer Melaminverbindung, zur Herstellung von spannungsriss-beständigen und halogenfreien flammgeschützten Polyesterformmassen. Nachteilig ist die schwierige Dosierung der flüssigen epoxidierten Öle bei der Compoundierung. Zudem werden nur mit Aluminiumhypophosphit gute Spannungs-Riss-Beständigkeiten erreicht, nicht aber mit Aluminiumdiethylphosphinat. Mit Aluminiumhypophosphit können aber keine hohen Brandschutzklassen in Polyestern erreicht werden.

Die DE 10 2010 053 483 A1 beschreibt die Verwendung von -N=C=N-enthaltenden Verbindungen zur Verhinderung oder zur Verminderung des thermischen Abbaus von Metalldialkylphosphinat enthaltenden Polyalkylenterephthalat-Schmelzen und ein Verfahren zum Einsatz von -N=C=N-enthaltenden Verbindungen bei der Verhinderung oder Verminderung des thermischen Abbaus von Metalldialkylphosphinat enthaltenden Polyalkylenterephthalat-Schmelzen. In den Beispielen wird der Schmelzindex (MVR) nach 5 und nach 20 min gemessen und als Maß für den thermischen Abbau der Schmelze angeführt. Hinweise auf das Hydrolyseverhalten der Polyester in der Schmelze finden sich nicht.

Aus der EP 2365028 ist die Verwendung von -N=C=N- enthaltenden Verbindungen zur Verhinderung oder Verminderung des thermischen Abbaus von Metalldialkylphosphinat enthaltenden Polyalkylenterephthalaten in der Schmelze bekannt. Hinweise auf das Hydrolyseverhalten der Polyester in der Schmelze finden sich nicht.

Die Verwendung von (Poly)Carbodiimiden (EP-A-794 974) oder von (Poly)Epoxyverbindungen (DE T1 69231831) führt zwar zu einer Verbesserung der Schmelzestabilität, jedoch weisen die beschriebenen Polyester-Zusammensetzungen Verarbeitungsnachteile auf, insbesondere durch Molekulargewichtsaufbau und eine daraus resultierende hohe Schmelzviskosität.

Nachteilig an den Verfahren des Standes der Technik ist die unzureichende Hydrolyse-stabilität der Polymere und die Verwendung von toxikologisch bedenklichen, monomeren Carbodiimiden. Bei Verwendung von Epoxidverbindungen in thermoplastischen Polymeren, insbesondere in Verbindung mit Flammschutzmitteln, kann es zudem zu Vernetzungen der Polymerketten und damit zu erheblichen Viskositätsanstiegen kommen.

Die Aufgabe der vorliegenden Anmeldung bestand nun darin, eine Flammschutzmittel-Stabilisatorkombination für die Ausrüstung von flammwidrigen und hydrolyse-beständigen Polymerzusammensetzungen bereitzustellen, die sich zudem durch gute mechanische Werte, keine Verfärbungen, keinen Polymerabbau bei der Verarbeitung und keine Verwendung toxikologisch bedenklicher Verbindungen auszeichnen.

Die Lösung der Aufgabe und Gegenstand der vorliegenden Erfindung ist die Verwendung einer Kombination von ausgewählten Stabilisatoren und/oder Gleitmitteln mit polymeren -N=C=N- enthaltenden Verbindungen zur Verbesserung der Hydrolysestabilität von Dialkylphosphinat enthaltenden Polymeren.

Überraschenderweise wurde gefunden, dass die Verwendung von Gemischen aus von ausgewählten Stabilisatoren und/oder Gleitmitteln und polymeren Carbodiimidverbindungen in Verbindung mit Dialkylphosphinaten geeignet ist zur Herstellung von flammgeschützten Polyester-, Polyamid oder Polyurethan-Formmassen, die eine ausgezeichnete Hydrolysebeständigkeit aufweisen.

Gleichzeitig entsprechen Flammschutzeigenschaften, mechanische, optische und elektrische Eigenschaften dem Anforderungsprofil für genannte Anwendungen, insbesondere im Transport- sowie im Elektro- und Elektronik-Bereich.

Die vorliegende Erfindung betrifft Mischungen enthaltend
- als Komponente A 5 bis 95 Gew.-% eines Phosphinsäuresalzes der Formel (V), eines Diphosphinsäuresalzes der Formel (VI), deren Polymere oder Gemischen von zwei oder mehreren davon, 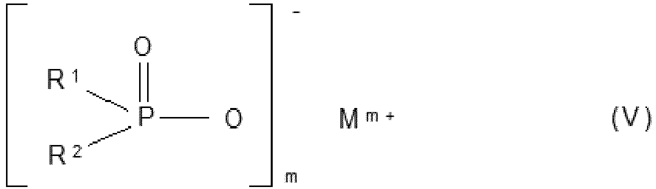 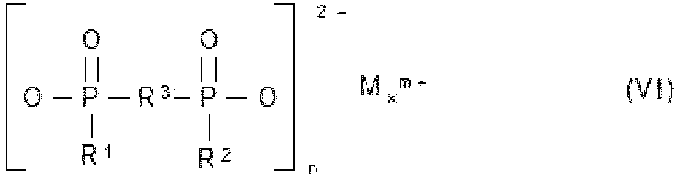 worin
   - R¹, R²: gleich oder verschieden sind und H oder C₁-C₆-Alkyl, linear oder verzweigt und/oder Aryl bedeuten,
   - R³: C₁-C₁₀-Alkylen, linear oder verzweigt, C₆-C₁₀-Arylen, -Alkylarylen oder -Arylalkylen bedeutet,
   - M: H, Mg, Ca, Al, Sb, Sn, Ge, Ti, Fe, Zn, Zr, Ce, Bi, Sr, Mn, Li, Na, K und/oder eine protonierte Stickstoffbase ist,
   - m: 1 bis 4 ist,
   - n: 1 bis 4 ist, und
   - x: 1 bis 4 bedeutet,
- als Komponente B 0,5 bis 20 Gew.-% einer polymeren Carbodiimidverbindung oder Gemischen davon,
- als Komponente C 0 bis 20 Gew.-% eines sterisch gehinderten Phenols oder Gemischen davon,
- als Komponente D 0 bis 20 Gew.-% eines organischen Phosphits und/oder organischen Phosphonits oder Gemischen davon,
- als Komponente E 0 bis 50 Gew.-% eines Melaminsalzes, eines Kondensations-produktes von Melamin oder Umsetzungsprodukte von Melamin mit Phosphorsäure und/oder kondensierten Phosphorsäuren bzw. Umsetzungsprodukte von Kondensationsprodukten des Melamins mit Phosphorsäure und/oder kondensierten Phosphorsäuren und/oder sowie Gemische der genannten Produkte und/oder ein anderes stickstoffhaltiges Flammschutzmittel als die vorgenannten;
- als Komponente F 0 bis 90 Gew.-% eines Füll- oder Verstärkungsstoffes oder Gemischen davon, und
- als Komponente G 0 bis 40 Gew.-% eines Gleit- und/oder Entformungsmittels oder Gemischen davon,
- als Komponente H 0 bis 40 Gew.-% weiterer Additive, die sich von Komponenten A bis G unterscheiden,
   wobei die Summe der Gewichtskomponenten 100 Gew.-% ergibt, mit der Massgabe, dass die Mischungen neben den Komponenten A und B mindestens zwei der Komponenten C, D und/oder G enthalten.

Im Folgenden umfasst der Begriff "Phosphinsäuresalz" Salze der Phosphin- und Diphosphinsäuren und deren Polymere sowie die Phosphinsäuren selbst. Die Phosphinsäuresalze, die in wässrigem Medium hergestellt werden, sind im Wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise: Dimethylphosphinsäure, Ethylmethylphosphinsäure, Diethylphosphinsäure, Methyl-n-propylphosphinsäure, Methandi(methylphosphinsäure), Benzol-1,4-(dimethylphosphinsäure), Methylphenylphosphinsäure und Diphenylphosphinsäure.

Die Salze der Phosphinsäuren gemäß der vorliegenden Erfindung können nach bekannten Methoden hergestellt werden, wie sie beispielsweise in der EP-A-0 699 708 näher beschrieben sind.

Die vorgenannten Phosphinsäuresalze können für die erfindungsgemäßen Flammschutzmittel-Stabilisatormischungen oder Polymercompounds je nach Art des verwendeten Polymeren und der gewünschten Eigenschaften in verschiedener physikalischer Form angewendet werden. So können die Phosphinsäuresalze z. B. zur Erzielung einer besseren Dispersion im Polymeren zu einer feinteiligen Form vermahlen werden. Es können auch Gemische verschiedener Phosphinsäuresalze eingesetzt werden.

Die eingesetzten Phosphinsäuresalze gemäß der Erfindung sind thermisch stabil, zersetzen die Polymere weder bei der Verarbeitung noch beeinflussen sie den Herstellprozess der Kunststoff-Formmasse. Die Phosphinsäuresalze sind unter den üblichen Herstellungs- und Verarbeitungsbedingungen für Polymere, wie Polyester, Polyamide und thermoplastische Polyurethane nicht flüchtig.

Erfindungsgemäß bevorzugt einzusetzende Phosphinsäuresalze der Komponente A sind Verbindungen der oben genannten Formeln (VII) oder (VIII), bei denen R¹ und R² gleich oder verschieden Methyl, Ethyl, n-Propyl, iso-Propyl, n-Butyl, tert.-Butyl, n-Pentyl und/oder Phenyl bedeuten, besonders bevorzugt Methyl, Ethyl, n-Propyl und/oder n-Butyl, und ganz besonders bevorzugt Ethyl.

Weitere erfindungsgemäß bevorzugt einzusetzende Phosphinsäuresalze der Komponente A sind Verbindungen der oben genannten Formel (VIII), bei denen R³ Methylen, Ethylen, n-Propylen, iso-Propylen, n-Butylen, tert.-Butylen, n-Pentylen, n-Octylen, n-Dodecylen, Phenylen, Naphthylen, Methylphenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen bedeutet, ganz besonders bevorzugt Ethylen, n-Propylen, n-Butylen oder Phenylen,

Erfindungsgemäß bevorzugt einzusetzende Phosphinsäuresalze der Komponente A sind Verbindungen der oben genannten Formeln (VII) oder (VIII), bei denen M Mg, Ca, Al, Ti, Fe, Zn, Ce, Bi, Sr oder Mn bedeutet.

Besonders bevorzugt bedeutet M Magnesium, Calcium, Aluminium oder Zink, ganz besonders bevorzugt Aluminium oder Zink.

Bevorzugt bedeutet m 2 oder 3; n 1 oder 3; x 1 oder 2.

Die bevorzugte Zugabemenge der Phospohinsäuresalze der Komponente A beträgt 10 bis 80 Gew.-% bezogen auf die Flammschutzmittel-Stabilisatormischung enthaltend Komponenten A bis B und gegebenenfalls C bis H.

Unter polymeren Carbodiimidverbindungen sind im Rahmen dieser Beschreibung Verbindungen zu verstehen, die mindestens zwei -N=C=N- Gruppen pro Molekül aufweisen, vorzugsweise mindestens fünf -N=C=N- Gruppen pro Molekül und ganz besonders bevorzugt mindestens zehn-N=C=N- Gruppen pro Molekül.

Besonders bevorzugte Komponenten B sind Carbodiimidverbindungen mit einem Molekulargewicht von mindestens 2000, insbesondere von mindestens 3000 und ganz besonders bevorzugt von mindestens 5000.

Das Molekulargewicht der Carbodiimide kann beispielsweise durch. Gelpermeations-chromatographie in Tetrahydrofuran bei 40°C gegen Polystyrol als Standard ermittelt werden. So können beispielsweise drei hintereinander geschaltete Säulen (bestehend aus einem mit Divinylbenzol vernetztem Polystyrol) der Firma PSS PolymerStandards Service GmbH mit einer Partikelgröße von 5 µm und Porengrößen zwischen 100 und 500 Å bei einer Flussrate von 1 mL/ min eingesetzt werden. Diese Methode wird beispielsweise in der EP 2430062 B1 beschrieben.

Erfindungsgemäß bevorzugt einzusetzende polymere -N=C=N- enthaltende Verbindungen der Komponente B sind Verbindungen der allgemeinen Formeln (II) oder (III) 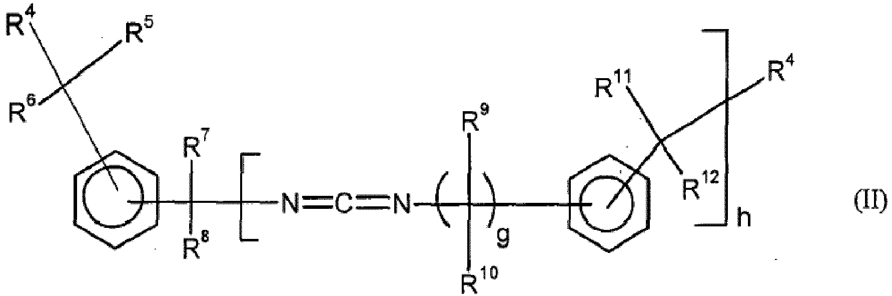 wobei
- R⁴: für NCO steht,
- R⁵, R⁶, R⁷, R⁸, R⁹, R¹⁰, R¹¹ und R¹²: unabhängig voneinander für Wasserstoff-, oder für einen Rest der Reihe C₁- bis C₁₀-Alkyl-, C₆- bis C₁₂-Aryl-, C₇- bis C₁₃-Aralkyl- oder C₇- bis C₁₃-Alkylaryl stehen,
- g: für eine ganze Zahl von 0 bis 5 steht,
- h: für eine ganze Zahl von 2 bis 100 steht; 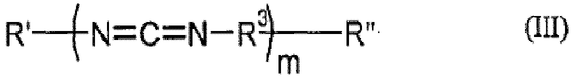
wobei in Formel (III)
- m: für eine ganze Zahl von 2 bis 5000, bevorzugt für eine ganze Zahl von 2 bis 500 steht,
- R3: einen Arylenrest, vorzugsweise einen 4,4'-Methylen-bis-(2,6-dialkylphenyl)-rest bedeutet, der in mindestens einer Orthostellung, bevorzugt in beiden Orthostellungen zu dem aromatischen Kohlenstoffatom, das die -N=C=N-Gruppe trägt, aliphatische und/oder cycloaliphatische Substituenten mit mindestens 2 C-Atomen, bevorzugt verzweigte oder cyclische aliphatische Reste mit mindestens 3 C-Atomen trägt,
- R': Aryl, Aralkyl, Aryl-NCO oder Aralkyl-NCO bedeutet und
- R": -N=C=N-Aryl, -N=C=N-Aralkyl oder -NCO bedeutet.

Erfindungsgemäß umfasst der Begriff der -N=C=N- enthaltenden Verbindungen -N=C=N- enthaltende Polymere, erhalten durch radikalische Polymerisation unter Einbeziehung von doppelbindungshaltigen Monomeren die mindestens eine -N=C=N-Gruppe enthalten.

Besonders bevorzugt als Komponente B eingesetzte -N=C=N- enthaltende Verbindungen sind Verbindungen der Formeln (IV) oder (V) 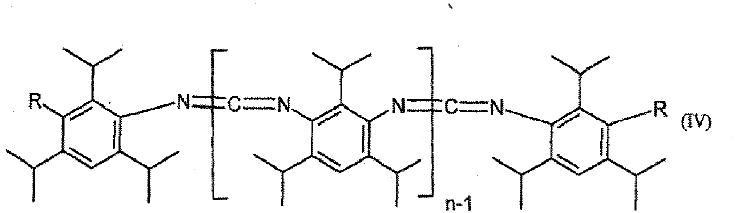 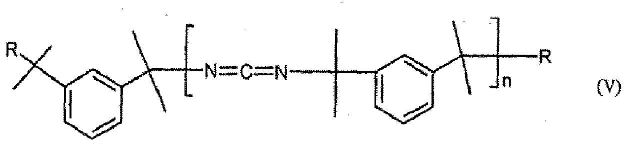 mit
- R: = NCO
bei denen
- n: für eine ganze Zahl von 2 bis 200 steht.

In einer alternativen Ausführungsform können die endständigen -NCO-Gruppen der Verbindungen (II) bis (V) unabhängig voneinander auch für -NCO-Umsetzungsprodukte stehen. Hierzu gehört die Umsetzung mit Alkoholen zu Urethanen der allgemeinen Formel -NHCOOX, wobei -OX für ein Alkylpolyetherglycol, ein Polyesterpolyol, einen Alkohol mit 1 bis 20 C-Atomen oder für einen Polyesterrest steht, die Umsetzung mit Aminen zu Harnstoffderivaten der allgemeinen Formel -NHCONY, wobei -NY für primäre oder sekundäre Amine mit Alkyl-, Cycloalkyl- bzw. Aralkylresten sowie für Aminoalkyltrialkoxysilan steht, sowie die Umsetzung mit Glycidylethern zu Oxazolidonen. Erfindungsgemäß sind die Umsetzungsprodukte mit Alkoholen zu Urethanen bevorzugt.

Erfindungsgemäß besonders bevorzugt werden -N=C=N- enthaltende polymere Verbindungen der Formel (IV) mit R = NCO eingesetzt, die als Stabaxol^{®} P von der Lanxess AG zu beziehen sind und einen Schmelzpunkt von 50°C und höher aufweisen.

Erfindungsgemäß ganz besonders bevorzugt werden -N=C=N- enthaltende hochmolekulare polymere Verbindungen eingesetzt, die als Stabaxol^{®} P100 von der Lanxess AG zu beziehen sind und Schmelzpunkte von 75°C und höher aufweisen und die Molekulargewichte von mindestens 3000 g/mol aufweisen.

Der Gehalt an Carbodiimid Gruppen in den Verbindungen der Komponente B liegt vorzugsweise bei mindestens 10 mol-%, bevorzugt bei mindestens 13 mol-%.

Die bevorzugte Zugabemenge der polymere Carbodiimide der Komponente B beträgt 5 bis 10 Gew.-% bezogen auf die Flammschutzmittel-Stabilisatormischung enthaltend Komponenten A bis B und gegebenenfalls C bis H.

Organische Carbodiimide sind bekannt. Ihre Chemie wird z. B. beschrieben in Chemical Reviews, Vol. 53 (1953), Seiten 145 bis und Angewandte Chemie 74 (1962), Seiten 801 bis 806.

Carbodiimide können beispielsweise hergestellt werden durch Einwirkung von basischen Katalysatoren auf sterisch gehinderte Polyisocyanate unter Kohlendioxidabspaltung. Als basische Katalysatoren geeignet sind z. B. gemäß GB-A-1 083 410 heterocyclische, Phosphor gebunden enthaltende Verbindungen und nach Angaben der DE-B-11 30 594 (GB-A-851 936) Phospholene und Phospholidine sowie deren Oxide und Sulfide. Die Carbodiimide finden vorzugsweise Verwendung als Stabilisatoren gegen die hydrolytische Spaltung von Kunststoffen auf Polyesterbasis.

Bei den erfindungsgemäß als Komponente C zugesetzten sterisch gehinderten Phenolen handelt es sich um an sich bekannte Antioxidantien.

Bevorzugt als Komponente C eingesetzte Antioxidantien sind alkylierte Monophenole, z.B. 2,6-Di-tert-butyl-4-methylphenol oder 2,6-Di-tert.-butyl-4-methoxyphenol; sterisch gehinderte Alkylthiomethylphenole, z. B. 2,4-Di-octylthiomethyl-6-tert.-butylphenol, sterisch gehinderte hydroxylierte Thiodiphenylether, z.B. 2,2'-Thio-bis(6-tert-butyl-4-methylphenol), 4,4'-Thio-bis-(6-tert-butyl-3-methyl-phenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfid; sterisch gehinderte Alkyliden-Bisphenole, z.B. 2,2'-Methylen-bis-(6-tert-butyl-4-methylphenol; sterisch gehinderte Benzylphenole, z.B. 3,5,3',5'-Tetra-tert-butyl-4,4'-dihydroxydibenzylether; sterisch gehinderte hydroxybenzylierte Malonate, z. B. Dioctadecyl-2,2-bis-(3,5-di-tert-butyl-2-hydroxy-benzyl)-malonat; sterisch gehinderte Hydroxybenzyl-Aromaten, z.B. 1,3,5-Tris-(3,5-di-tert-buty)-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol; sterisch gehinderte phenolische Triazinverbindungen, z. B. 2,4-Bis-octylmercapto-6(3,5-di-tert-butyl-4-hydroxyanilino)-1,3,5-triazin; sterisch gehinderte phenolische Benzylphosphonate, z. B. Dimethyl-2,5-di-tert-butyl-4-hydroxybenzylphosphonat; N-(3,5-di-tert-butyl-4-hydroxyphenyl)-carbaminsäurealkylester; Ester der β-(3.5-Di-tert-butyl-4-hydroxyphenyl)-propionsäure mit ein- oder mehr-wertigen Alkoholen; Ester der β-(5-tert-Butyl-4-hydroxy-3-methylphenyl)-propionsäure mit ein- oder mehrwertigen Alkoholen; Ester der β-(3,5-Dicyclohexyl-4-hydroxyphenyl)-propionsäure mit ein- oder mehr-wertigen Alkoholen; Ester der 3,5-Di-tert-butyl-4-hydroxyphenylessigsäure mit ein- oder mehrwertigen Alkoholen; Amide der β-(3,5-Di-tert-butyl-4-hydroxyphenyl)-propionsäure, wie z. B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin oder N,N'-Bis-(3,5-di-tert-butyl-4-hydroxyphenylpropionyl)-hydrazin.

Die bevorzugte Zugabemenge der sterisch gehinderten Phenole der Komponente C beträgt 0,5 bis 20 Gew.-%, insbesondere 1 bis 10 Gew.-% und ganz besonders bevorzugt 3 bis 5 Gew.-% bezogen auf die Flammschutzmittel-Stabilisatormischung enthaltend Komponenten A bis B und gegebenenfalls C bis H.

Bei den erfindungsgemäß als Komponente D zugesetzten organischen Phosphiten und/oder organischen Phosphoniten handelt es sich um an sich bekannte Co-Stabilisatoren für Antioxidantien.

Organische Phosphite haben die allgemeine Formel P(OR)₃, worin R einwertige organische Reste sind.

Organische Phosphonite haben die allgemeine Formel PR'(OR)₂, worin R und R' einwertige organische Reste sind.

Beispiele für geeignete organische Phosphite sind Triarylphosphite, Diarylalkylphosphite, Aryldialkylphosphite, Trialkylphosphite

Beispiele für Triarylphosphite sind Triphenylphosphite, insbesondere Tris-(nonylphenyl)phosphit oder Tris(2,4-di-tert-butylphenyl)phosphit.

Beispiele für Diarylalkylphosphite sind Diphenylalkylphosphite, insbesondere Bis-(2,4-di-tert-butyl-6-methylphenyl)methylphosphit oder Bis(2,4-di-tert-butyl-6-methylphenyl)ethylphosphit.

Beispiele für Aryldialkylphosphite sind Phenyldialkylphosphite.

Beispiele für Trialkylphosphite sind C₁₂-C₁₈-Trialkylphosphite, insbesondere Trilaurylphosphit oder Trioctadecylphosphit.

Beispiele für weitere geeignete organische Phosphite sind Pentaerythritdiphosphite, wie Distearylpentaerythritdiphosphit, Diisodecylpentaerythritdiphosphit, Bis(2,4-di-tert-butylphenyl)pentaerythritdiphosphit, Bis(2,6-di-tert-butyl-4-methylphenyl)pentaerythrit-diphosphit, Diisodecyloxypentaerythritdiphosphit, Bis-(2,4-di-tert-butyl-6-methylphenyl)-pentaerythritdiphosphit oder Bis-(2,4,6-tris(tert-butylphenyl))pentaerythritdiphosphit.

Weitere geeignete Organophosphite sind Tristearylsorbittriphosphit, 2,2',2"-Nitrilo-[triethyl-tris(3,3',5,5'-tetra-tert-butyl-1,1'-biphenyl-2,2'-diyl)phosphit] oder 2-Ethylhexyl-(3,3',5,5'-tetra-tert-butyl-1,1'-biphenyl-2,2'-diyl)-phosphit.

Besonders bevorzugt wird als Komponente C N, N'-Bis[3-(3',5'-di-tert-butyl-4'-hydroxyphenyl)propionyl]-hexamethylendiamin (z.B. Irganox^{®} 1098, BASF) und als Komponente D Tris(2,4-ditert-butylphenyl)phosphit (z. B. Irgaphos^{®} 168, BASF) eingesetzt.

Besonders bevorzugt wird als Komponente C N, N'-Bis[3-(3',5'-di-tert-butyl-4'-hydroxyphenyl)propionyl]-hexamethylendiamin (z. B. Irganox^{®} 1098, BASF) und als Komponente D Tetrakis(2,4-di-tert-butylphenyl)-[1,1-biphenyl]-4,4'-diylbisphosphonit (z. B. Sandostab^{®} P-EPQ, Clariant) eingesetzt.

Die bevorzugte Zugabemenge der organischen Phosphiten und/oder der organischen Phosphoniten der Komponente D beträgt 0,5 bis 20 Gew.-%, insbesondere 1 bis 10 Gew.-% und ganz besonders bevorzugt 3 bis 5 Gew.-% bezogen auf die Flammschutzmittel-Stabilisatormischung enthaltend Komponenten A bis B und gegebenenfalls C bis H.

Die erfindungsgemäße Flammschutzmittel-Stabilisatorkombination enthält bevorzugt als Komponente E ein Melaminsalz, ein Kondensationsprodukt von Melamin oder ein Umsetzungsprodukt von Melamin mit Phosphorsäure und/oder kondensierten Phosphorsäuren oder Umsetzungsprodukte von Kondensationsprodukten des Melamins mit Phosphorsäure und/oder kondensierten Phosphorsäuren und/oder sowie Gemische der genannten Produkte.

Besonders bevorzugt enthält erfindungsgemäße Flammschutzmittel-Stabilisatorkombination als Komponente E ein Melaminpolyphosphat mit einem mittleren Kondensationsgrad von größer gleich 20.

Die Verwendung der erfindungsgemäß als Komponente E bevorzugt eingesetzten Poly-phosphatderivate von Melamin mit einem Kondensationsgrad von größer gleich 20 als Flammschutzmittel ist bekannt. So offenbart die DE 10 2005 016 195 A1 ein stabilisiertes Flammschutzmittel enthaltend 99 bis 1 Gew.-% Melaminpolyphosphat und 1 bis 99 Gew.-% Additiv mit Reservealkalität. In diesem Dokument wird auch offenbart, dass dieses Flammschutzmittel mit einer Phosphinsäure und/oder einem Phosphin-säuresalz kombiniert werden kann.

Ganz besonders bevorzugte erfindungsgemäße Flammschutzmittel-Stabilisatorkombinationen enthalten als Komponente E ein Melaminpolyphosphat, dessen durchschnittlicher Kondensationsgrad 20 bis 200, insbesondere von 40 bis 150, beträgt.

Weitere bevorzugte erfindungsgemäße Flammschutzmittel-Stabilisatorkombinationen enthalten als Komponente E ein Melaminpolyphosphat, das eine Zersetzungs-temperatur von größer gleich 320°C, insbesondere von größer gleich 360°C und ganz besonders bevorzugt von größer gleich 400°C aufweist.

Bevorzugt werden als Komponente E Melaminpolyphosphate eingesetzt, die aus WO 2006/027340 A1 (entsprechend EP 1 789 475 B1) und WO 2000/002869 A1 (entsprechend EP 1 095 030 B1) bekannt sind.

Bevorzugt werden Melaminpolyphosphate als Komponente E eingesetzt, deren durchschnittlicher Kondensationsgrad zwischen 20 und 200, insbesondere zwischen 40 und 150 liegt, und deren Melamingehalt 1,1 bis 2,0 mol, insbesondere 1,2 bis 1,8 mol pro Mol Phosphoratom beträgt.

Ebenfalls bevorzugt werden Melaminpolyphosphate als Komponente eingesetzt, deren mittlerer Kondensationsgrat (Zahlenmittel) >20 ist, deren Zersetzungstemperatur größer als 320°C ist, deren Molverhältnis von 1,3,5-Triazinverbindung zu Phosphor kleiner als 1,1, insbesondere 0,8 bis 1,0 beträgt und deren pH-Wert einer 10 %-igen Aufschlämmung in Wasser bei 25°C 5 oder höher ist, vorzugsweise 5,1 bis 6,9.

In einer weiteren bevorzugten Ausführungsform enthält die erfindungsgemäße Flammschutzmittel-Stabilisatorkombination als Komponente E Melamincyanuarat.

Das erfindungsgemäß als Komponente E eingesetzte Melamincyanurat ist als Synergist in Verbindung mit Diethylphospinaten in Flammschutzmitteln für polymere Formmassen bekannt, beispielsweise aus WO 97/39053 A1).

Ganz besonders bevorzugt handelt es sich bei der Komponente E um Melamincyanurat, Melaminphosphat, Dimelaminphosphat, Melaminpyrophosphat, Melamin-polyphosphate, Melampolyphosphate, Melempolyphosphate und/oder Melonpolyphosphate.

Äußerst bevorzugt handelt es sich bei der Komponente E um Melaminkondensations-produkte wie Melam, Melem und/oder Melon, insbesondere um Melem.

Die bevorzugte Zugabemenge der Melamin(derivate) der Komponente E beträgt 10 bis 40 Gew.-% bezogen auf die Flammschutzmittel-Stabilisatormischung enthaltend Komponenten A bis B und gegebenenfalls C bis H.

Beispiele für Komponente F sind mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat und/oder Bariumsulfat und/oder Glasfasern. Ganz besonders bevorzugt handelt es sich um Glasfasern.

Die bevorzugte Zugabemenge der Füll- und/oder Verstärkungsstoffe der Komponente F beträgt 10 bis 70 Gew.-%, insbesondere 15 bis 50 Gew.-%, bezogen auf die Flammschutzmittel-Stabilisatormischung enthaltend Komponenten A bis B und gegebenenfalls C bis G.

Bei Komponente G handelt es sich um Gleit- und/oder Entformungsmittel. Beispiele dafür sind langkettige Fettsäuren, deren Salze, deren Esterderivate und/oder Amid Derivate, Montanwachse und/oder niedermolekulare Polyethylen- und/oder Polypropylenwachse.

Die bevorzugte Zugabemenge der Komponente G beträgt 1 bis 30 Gew.-%, insbesondere 5 bis 20 Gew.-%, bezogen auf die Flammschutzmittel-Stabilisatormischung enthaltend Komponenten A bis B und gegebenenfalls C bis H.

In der erfindungsgemäßen Flammschutzmittel-Stabilisatormischung sind neben den zwingend vorhandenen Komponenten A und B mindestens zwei der Komponenten C, D und/oder G vorhanden. Beispiele dafür sind Kombinationen von A, B, C und D, von A, B, C und G oder von A, B, D und G.

Die erfindungsgemäße Flammschutzmittel-Stabilisatormischung kann zur Herstellung von flammwidrigen Polymercompounds eingesetzt werden.

Die Erfindung betrifft daher auch eine Zusammensetzung enthaltend neben den oben genannten Komponenten A bis B und gegebenenfalls C bis H als weitere Komponenten I ein thermoplastisches Polymer oder eine Mischung davon.

Bevorzugt eingesetzte Komponenten I sind thermoplastische Polyester, thermoplastische Polyamide, thermoplastische Polyurethane, thermoplastisch-elastomere Polyester, thermoplastisch-elastomere Polyamide oder thermoplastisch-elastomere Polyurethane.

Bevorzugt sind flammwidrige Polymercompounds, enthaltend 40 bis 94,9 Gew.-% Komponente I, 10 bis 20 Gew.-% Komponente A, 0,3 bis 3 Gew.-% Komponente B, 0 bis 3 Gew.-% Komponente C, 0 bis 3 Gew.-% Komponente D, 0 bis 10 Gew.-% Komponente E, 15 bis 35 Gew.-% Komponente F, 0 bis 2 Gew.-% Komponente G und 0 bis 2 Gew.-% Komponente H, wobei die Summe der Gewichtskomponenten 100 Gew.-% ergibt und wobei mindestens zwei der Komponenten C, D und/oder G anwesend sein müssen.

Besonders bevorzugt sind flammwidrige Polymercompounds, enthaltend 40 bis 72,9 Gew.-% Komponente I, 10 bis 15 Gew.-% Komponente A, 0,3 bis 2 Gew.-% Komponente B, 0 bis 3 Gew.-% Komponente C, 0 bis 3 Gew.-% Komponente D, 2 bis 10 Gew.-% Komponente E, 15 bis 30 Gew.-% Komponente F, 0 bis 2 Gew.-% Komponente G und 0,1 bis 2 Gew.-% Komponente H, wobei die Summe der Gewichtskomponenten 100 Gew.-% ergibt und wobei mindestens zwei der Komponenten C, D und/oder G anwesend sein müssen.

Die Erfindung betrifft auch ein Verfahren zur Herstellung von erfindungsgemäßen Flammschutzmittel-Stabilisatormischungen und der flammwidrigen Polymercompounds, dadurch gekennzeichnet, dass man die Komponenten A bis B und gegebenenfalls C bis H oder die Komponenten A bis B und I und gegebenenfalls C bis H in den genannten Gewichtsanteilen durch Schmelzextrusion vermischt.

Die Erfindung betrifft zudem Fasern, Folien und Formkörpern hergestellt aus den erfindungsgemäßen flammwidrigen Polymercompounds.

Die Erfindung betrifft die Verwendung der Fasern, Folien und Formkörper hergestellt aus den erfindungsgemäßen flammwidrigen Polymercompounds in Steckern, Schaltern, Kondensatoren, Isolationssystemen, Lampensockeln, Spulenkörpern, Gehäusen und Steuerungen sowie anderen Gegenständen.

Schließlich betrifft die Erfindung die Verwendung der Fasern, Folien und Formkörper hergestellt aus den erfindungsgemäßen flammwidrigen Polymercompounds im Haushalt, der Industrie, in Medizin, in Kraftfahrzeugen, in Flugzeugen, in Schiffen, in Büroausstattungen sowie in Gegenständen und Gebäuden die einen erhöhten Brandschutz erfordern.

Bevorzugt handelt es sich bei dem thermoplastischen Polymeren (Komponente I) um Polyester. Als besonders bevorzugte Polyester I sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester I liegt im Allgemeinen im Bereich von 50 bis 220, vorzugsweise von 80 bis 160 ml/g (gemessen in einer 0,5 gew.-%igen Lösung in einem Phenol/o-Dichlorbenzolgemisch (Gew.-Verh. 1:1 bei 25°C)) gemäß ISO 1628.

Insbesondere bevorzugt sind Polyester, deren Carboxylendgruppengehalt bis zu 100 mval/kg, bevorzugt bis zu 40 mval/kg und besonders bevorzugt kleiner als 20 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z. B. Potentiometrie) bestimmt.

Insbesondere bevorzugte Formmassen enthalten als Komponente I eine Mischung aus Polyestern, welche verschieden von PBT sind, wie beispielsweise Polyethylen-terephthalat (PET). Der Anteil z.B. des Polyethylenterephthalates beträgt vorzugsweise in der Mischung bis zu 50, insbesondere 1,0 bis 35 Gew.-%, bezogen auf 100 Gew.-% H.

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im Allgemeinen:
1) sogenannte Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Roh Rezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Bevorzugt handelt es sich bei den Polyestern I auch um Copolyetherester. Copolyetherester sind Polymere die durch Umsetzung von C₂-C₆ Diolen mit einer aromatischen Dicarbonsäure und einem Poly(alkyleneoxide)diol erhalten werden. Das C₂-C₆ diol ist bevorzugt ausgewählt aus Ethylenglycol, Propylenglycol, Butylenglycol, und deren Mischungen, wobei Butylenglycol bevorzugt ist. Die aromatische Dicarbonsäure ist ausgewählt aus Terephthalat, *iso*-Phthalate, und deren Mischungen. Die Poly(alkyleneoxide)diole sind bevorzugt ausgewählt aus Poly(ethylenoxide)diol, Poly(propylenoxide)diol, Poly(tetramethylenoxide)diol ("PTMEG"), und deren Mischungen.

Bei den Polymeren der Komponente I kann es sich auch um thermoplastisch elastomere Polyester handeln. Diese Polyester sind dem Fachmann bekannt.

Bevorzugt handelt es sich bei den Polymeren I um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10, Polyamid 11, Polyamid 12, usw. Diese sind z. B unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie, bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, Ionomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bei den Polymeren der Komponente I kann es sich auch um thermoplastisch elastomere Polyamide handeln. Diese Polyamide sind dem Fachmann bekannt.

Unter thermoplastisch-elastomerem Polyurethan werden thermoplastische Elastomere auf Urethanbasis, z. B. Desmopan^{®} (Bayer), verstanden.

Besonders bevorzugt werden erfindungsgemäß mineralische teilchenförmige Füllstoffe auf der Basis von Talk, Wollastonit, Kaolin und/oder Glasfasern als Komponente F eingesetzt.

Insbesondere für Anwendungen, in denen Isotropie bei der Dimensionsstabilität und eine hohe thermische Dimensionsstabilität gefordert werden, wie beispielsweise in Kfz-Anwendungen für Karosserieaußenteile, werden bevorzugt mineralische Füllstoffe als Komponente F eingesetzt, insbesondere Talk, Wollastonit oder Kaolin.

Besonders bevorzugt handelt es sich bei der Komponente F um Glasfasern.

Als faser- oder teilchenförmige Füllstoffe F seien Kohlenstofffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 60 Gew.-%, insbesondere bis zu 50 % Gew.-%, bezogen auf die Gesamtmasse der Zusammensetzung, eingesetzt werden.

Als bevorzugte faserförmige Füllstoffe seien Kohlenstofffasern und Aramid-Fasern genannt, wobei Glasfasern als E-Glas besonders bevorzugt sind. Diese können als Mahlglas, Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,05 bis 5, vorzugsweise 0,5 bis 1,5 und insbesondere 0,8 bis 1 Gew.-% (bezogen auf F) zur Oberflächenbeschichtung eingesetzt.

Besonders bevorzugt können ferner auch nadelförmige mineralische Füllstoffe als Komponente F eingesetzt werden. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser-Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen geeigneten nadelförmigen Mineralien liegt bevorzugt bei kleiner 20 µm, besonders bevorzugt bei kleiner 15 µm, insbesondere bevorzugt bei kleiner 10 µm.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die teilchenförmigen Füllstoffe können bedingt durch die Verarbeitung zur Formmasse bzw. Formkörper in der Formmasse bzw. im Formkörper einen kleineren d₉₀- bzw. dso-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer weiteren alternativen bevorzugten Ausführungsform können die Formmassen zusätzlich zu den Komponenten A bis F mindestens ein Gleit- und Entformungsmittel als weiteres Additiv G enthalten. Hierzu eignen sich beispielsweise langkettige Fettsäuren (z. B. Stearinsäure oder Behensäure), deren Salze (z. B. Ca- oder Zn-Stearat) sowie deren Esterderivate oder Amidderivate (z. B. Ethylen-bis-stearylamid), Montanwachse (Mischungen aus geradkettigen, gesättigten Carbonsäuren mit Kettenlängen von 28 bis 32 C-Atomen) sowie niedermolekulare Polyethylen- bzw. Polypropylenwachse. Erfindungsgemäß werden bevorzugt Gleit- und/oder Entformungsmittel aus der Gruppe der niedermolekularen Polyethylenwachse sowie der Ester gesättigter oder ungesättigter aliphatischer Carbonsäuren mit 8 bis 40 C-Atomen mit aliphatischen gesättigten Alkoholen mit 2 bis 40 C-Atomen eingesetzt, wobei Pentaerythrittetrastearat (PETS) ganz besonders bevorzugt ist.

Weitere mögliche Additive H sind z. B. weitere Stabilisatoren (zum Beispiel UV-Stabilisatoren), Antistatika, weitere Flammschutzmittel, Emulgatoren, Nukleierungs-mittel, Weichmacher, Verarbeitungshilfsmittel, Schlagzähmodifikatoren, Farbstoffe und Pigmente. Die weiteren Additive H können alleine oder in Mischung bzw. in Form von Masterbatchen eingesetzt werden oder vorweg der Komponente I in der Schmelze zugemischt oder auf deren Oberfläche aufgebracht werden.

Als weitere Stabilisatoren können zum Beispiel Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als geeignete UV-Stabilisatoren seien verschiedene substituierte Resorcine, Salicylate, Benzotriazole und Benzophenone genannt.

Im Falle von Schlagzähmodifikatoren (Elastomermodifikatoren, Modifikatoren) handelt es sich ganz allgemein um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Es können anorganische Pigmente, wie Titandioxid, Ultramarinblau, Eisenoxid, Zinksulfid und Ruß, weiterhin organische Pigmente, wie Phthalocyanine, Chinacridone, Perylene sowie Farbstoffe, wie Nigrosin und Anthrachinone als Farbmittel sowie andere Farbmittel zugesetzt werden. Im Rahmen der vorliegenden Erfindung ist die Verwendung von Ruß bevorzugt.

Als Nukleierungsmittel können z. B. Natrium- oder Calciumphenylphosphinat, Aluminiumoxid oder Siliziumdioxid sowie bevorzugt Talkum eingesetzt werden.

Als Verarbeitungshilfsmittel können zum Beispiel Copolymerisate aus mindestens einem α-Olefin mit mindestens einem Methacrylsäurester oder Acrylsäureester eines aliphatischen Alkohols eingesetzt werden. Bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 4 bis 20 C-Atomen enthält. Besonders bevorzugt ist Acrylsäurebutylester und Acrylsäure-(2-ethyl)-hexylester.

Als Beispiele für Weichmacher seien Phthalsäuredioctylester, Phthalsäuredibenzylester, Phthalsäurebutylbenzylester, Kohlenwasserstofföle und N-(n-Butyl)benzolsulfonamid genannt.

Die Komponenten A bis B und gegebenenfalls C bis H können in thermoplastische Polymere eingearbeitet werden, indem z.B. alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Einzelne Komponenten können auch separat über eine Dosieranlage direkt in das Compoundieraggregat eingebracht werden.

Es ist ebenso möglich, die Zusätze A bis B und gegebenenfalls C bis H einem fertigen Polymergranulat bzw. -pulver beizumischen und die Mischung direkt auf einer Spritzgussmaschine zu Formteilen zu verarbeiten.

Die flammwidrigen Polymercompounds eignen sich zur Herstellung von Formkörpern, Filmen, Fäden und Fasern, z. B. durch Spritzgießen, Extrudieren oder Verpressen.

### Beispiele

### 1. Eingesetzte Komponenten

Thermoplastische Polymere, Komponente I:
Polybutylenterephthalat (PBT): Ultradur^{®} 4500 (BASF, D)
   Thermoplastische Copolyetherester Elastomere (TPC):
   Riteflex^{®} 655 TPC unfilled (Celanese, Shore D Härte 55), als TPC-55 bezeichnet
   Riteflex^{®} 440 TPC unfilled (Celanese, Shore D Härte 40)
Polyamid 66: Ultramid^{®} A27, BASF
TPU: Elastollan^{®} 1185, BASF

### Komponente A:

Aluminiumsalz der Diethylphosphinsäure, im Folgenden als DEPAL bezeichnet.

### Komponente B:

Stabaxol^{®} P, polymeres Carbodiimid, Schmelzbereich 50-60°C, Lanxess
Stabaxol^{®} P100, hochmolekulares Carbodiimid, Schmelzbereich 75-85°C, Lanxess
Stabaxol^{®} P110, hochmolekulares Carbodiimid, Schmelzbereich 60-70°C, Lanxess
Stabaxol^{®} PLF, polymeres Carbodiimid ohne Monomeranteile, Lanxess

Lubio^{®} AS 3, polymeres Carbodiimid, Schäfer Additivsysteme, als AS 3 bezeichnet
Lubio^{®} AS 18, hochmolekulares, polymeres Carbodiimid, Schäfer Additivsysteme, als AS 18 bezeichnet

### Komponente C:

Irganox^{®} 1010 (Pentaerythritol tetrakis(3-(3,5-di-tert-butyl-4-hydroxyphenyl)propionate), Fa. BASF, als sterisch gehindertes Phenol bezeichnet
Irganox^{®} 1330 (3,3',3',5,5',5'-hexa-tert-butyl-a,a',a'-(mesitylene-2,4,6-triyl)tri-p-cresol), Fa BASF, als sterisch gehindertes Phenol bezeichnet.
Irganox^{®}245 ethylene bis (oxyethylene) bis-(3-(5-tert-butyl-4-hydroxy-m-tolyl)-propionate), als sterisch gehindertes Phenol bezeichnet

### Komponente D:

Melapur^{®} MC 50 (Melamincyanurat), Fa. BASF, als MC bezeichnet
Melapur^{®} 200/70 (Melaminpolyphosphat = MPP), BASF, als MPP bezeichnet Delflam 20 (Melem), Delamin, UK, als Melem bezeichnet

### Komponente F:

PPG Glasfaser HP 3610 EC 10 4,5 mm
PPG Glasfaser HP 3786 EC 10 4.5 mm, Fa. Nippon Electric Glass, NL

### Komponente G:

Gleitmittel: Licowax^{®} E, Montanwachs, Fa. Clariant, CH

### Zum Vergleich

Araldite GT 7072; Fa Huntsman, CH, als Epoxid bezeichnet

Lotader AX8900, Fa. Arkema, Impact Modifier auf Basis Ethylene-Methyl Acrylate-Glycidyl Methacrylate Terpolymer, als AX 8900 bezeichnet

### 2. Herstellung, Verarbeitung und Prüfung von flammwidrigen Polyester-, Polyamid- und Polyurethancompounds

Die Flammschutzkomponenten wurden in dem in den Tabellen angegebenen Verhältnis mit dem Polymergranulat und evtl. Additiven vermischt und auf einem Doppelschnecken-Extruder (Typ Leistritz ZSE 27 HP-44D) bei Temperaturen von 240 bis 280°C eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320C/KT) bei Massetemperaturen von 260 bis 280°C zu Prüfkörpern verarbeitet. Die Flammwidrigkeit der Formmassen wurde nach der Methode UL94V (Underwriters Laboratories Inc. Standard of Safety, "Test for Flammability of Plastic Materials for Parts in Devices and Appliances", Seite 14 bis Seite 18 Northbrook 1998) bestimmt.

Die Brandprüfungen wurden nach UL 94 Vertikaltest durchgeführt. Nach UL 94 ergeben sich folgende Brandklassen:
V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0
V-2: Zündung der Watte durch brennendes Abtropfen, übrige Kriterien wie bei V-1

### Nicht klassifizierbar (nkl): erfüllt nicht die Brandklasse V-2.

In den Beispielen wird die Nachbrennzeit der 10 Beflammungen von 5 Prüfkörpern angeben.

Die Bestimmung der Hydrolysebeständigkeit wurde mit einem CertoClav MultiControl 2 (Laborautoklav) der Firma CertoClav Sterilizer GmbH durchgeführt. Die Probenlagerung im Autoclaven dient dazu, den Abbau des Materials durch hohe Temperaturen und hohe Feuchtigkeit zu prüfen. Die Probekörper werden bevorzugt durch Spritzgießen hergestellt. Die Anzahl der Probekörper richtet sich nach den verlangten Prüfungen und der Zahl der eventuell vorgesehenen Entnahmen. Die Prüfung der Hydrolyse-beständigkeit erfolgte gemäß der DIN EN 60749-33, sprich einer Heißdrucklagerung in 100 % relativer Feuchte bei 121°C und 1 barÜ.

Darüber hinaus wurde die Hydrolysebeständigkeit auch durch 40 Tage Lagerung von Normzugstäben im Klimaschrank bei 85°C und 85% relativer Luftfeuchtigkeit bestimmt. Maßgeblich sind die mechanischen Werte vor und nach dem Hydrolysetest bzw. der Erhalt (Retention) der Werte nach Lagerung in Prozent.

Die Bestimmung der Zugeigenschaften erfolgte mit einer Zugprüfmaschine Z 010 (Fa. Zwick) nach der DIN EN ISO 527-1/-2/-3. Das Verfahren wird verwendet, um das Zugverformungsverhalten von Probekörpern zu untersuchen und die Zugfestigkeit, den Zugmodul und andere Gesichtspunkte der Zugspannungs-/Dehnungs-Beziehung unter festgelegten Bedingungen zu ermitteln. Die Probekörper werden bevorzugt durch Spritzgießen hergestellt. Die Anzahl der Probekörper richtet sich nach den verlangten Prüfungen. Für die Probenvorbereitung erfolgt eine Lagerung der Prüfkörper von mind. 16 h im Klimaraum bei 23°C / 50 % rel. Feuchte. Polyamid-Prüfkörper und sonstige stark wasseraufnehmende Prüfkörper müssen in einem luftdicht verschweißten Beutel mind. 24 h bei 23°C und 50 % rel. Feuchte gelagert werden. Der Probekörper wird entlang seiner größten Hauptachse bei konstanter Geschwindigkeit gedehnt, bis er bricht oder bis die Spannung (Kraft) oder Dehnung (Längenänderung) einen vorgegebenen Wert erreicht während dieses Vorgangs werden die vom Probekörper getragenen Belastung und die Längenänderung gemessen. Die Messung erfolgt im Klimaraum bei 23°C und 50 % rel. Feuchte.

### Beispiele Polyester-Elastomere

**Tabelle 1: Thermoplastisches Polyester Elastomer: Dehnung spitzfrisch und nach 3 Tagen Pressure-Cooker-Test (121°C, 1 barÜ), B1-2 sind erfindungsgemäße Beispiele**

| | | V1 | B1 | B2 |
|---|---|---|---|---|
| TPC-55 | | 83,0 | 81,0 | 81,0 |
| DepAI | | 12 | 12 | 12 |
| MC | | 4,5 | 4,5 | 4,5 |
| Stabaxol P | | | 2 | |
| Stabaxol P100 | | | | 2 |
| Irganox^{®} 1010 | | 0,3 | 0,3 | 0,3 |
| Licowax E | | 0,2 | 0,2 | 0,2 |
| UL94 0,8 mm | | V-2 | V-2 | V-2 |
| NBZ/s | | 14 | 32 | 26 |
| Watte brennt / brennende und nicht brennende Tropfen | | 5 / 15 | 5 / 12 | 5 / 15 |
| Dehnung (Bruch) / % | T0* | 352 | 343 | 306 |
| | T3* | 16 | 252 | 228 |
| Retention (Bruch) nach 3 Tagen* / % | | 4 | 74 | 75 |
| Dehnung (Max) / % | T0* | 100 | 100 | 100 |
| | T3* | 5 | 71 | 72 |
| E-Modul (Mpa) | T0* | 184 | 180 | 184 |
| | T3* | 157 | 164 | 186 |

| | | | | |
|---|---|---|---|---|
| *0= spritzfrisch, *3= nach 3 Tagen Lagerung im Laborautoklaven PCT (121°C, 1 barÜ) | | | | |

Die Tabelle 1 zeigt, dass unter Verwendung von DepAl, MC, polymeren Carbodiimiden, sterisch gehinderten Phenolen und Gleitmitteln flammwidrige thermoplastische Elastomere erhalten werden können. Durch den Zusatz an Carbodiimid, sterisch gehindertem Phenol und Gleitmittel wird der Flammschutz nicht beeinträchtigt. Nach dreitägiger Exposition im Autoklav (Pressure Cooker Test, 121°C, 1 barÜ) ist noch ein Erhalt an bis zu 75% der Bruchdehnung festzustellen. Bei Compoundierung wurde keine Druckerhöhung, keine Gas- bzw. Geruchbildung beobachtet.

### Beispiele PBT

**Tabelle 2: PBT GF 25 Compounds: Dehnung spritzfrisch und Vergleich nach Lagerung Klimaschrank (85°C/85%rel. hum., 40 Tage) vs. Pressure Cooker Test (PCT, 121°C, 1 barÜ, 3 Tage), B 3 ist ein erfindungsgemäßes Beispiel**

| | | | V2 | V3 | V4 | B3 | V5 | V6 | V7 | V8 |
|---|---|---|---|---|---|---|---|---|---|---|
| | PBT | | 74,4 | 72,4 | 54,4 | 53,4 | 52,4 | 53,4 | 51,4 | 52,4 |
| | Glasfaser | | 25 | 25 | 25 | 25 | 25 | 25 | 25 | 25 |
| | DepAl | | | | 13,3 | 13,3 | 13,3 | 13,3 | 13,3 | 13,3 |
| | MC | | | | 6,7 | 6,7 | 6,7 | 6,7 | 6,7 | 6,7 |
| | Licowax E | | 0,3 | 0,3 | 0,3 | 0,3 | 0,3 | 0,3 | 0,3 | 0,3 |
| | Lubio AS 3 | | | | | 1 | | | | |
| | Epoxid | | | 2 | | | 2 | 1 | 3 | |
| | AX 8900 | | | | | | | | | 2 |
| | Irganox^{®} 1010 | | 0,3 | 0,3 | 0,3 | 0,3 | 0,3 | 0,3 | 0,3 | 0,3 |
| | UL94 0,8 mm | | verbrannt | verbrannt | V-0 | V-0 | V-1 | V-1 | V-1 | V-1 |
| | NBZ/s | | - | - | 47 | 22 | 96 | 83 | 119 | 87 |
| Klimaschrank (85°C/ 85%rel.hum./ 40 days) | Dehnung (Bruch) / % | T0* | 3,1 | 3,08 | 2,35 | 2,27 | 1,61 | 1,95 | 1,16 | 2,36 |
| | | T40* | 1,67 | 2,40 | 0,79 | 1,99 | 0,71 | 0,79 | 0,59 | 0,87 |
| | Retention (Bruch) nach 40 Tagen / % | | 54 | 78 | 34 | 88 | 44 | 41 | 51 | 37 |
| | Zugfestigkeit (Bruch) / N/mm² | T0* | 121 | 133 | 105 | 111 | 102 | 106 | 90 | 102 |
| | | T40* | 96 | 119 | 57 | 98 | 56 | 63 | 53 | 59 |
| | E-Modul (Mpa) | T0* | 8364 | 8925 | 9851 | 10029 | 10272 | 9976 | 10377 | 9377 |
| | | T40* | 7882 | 8463 | 9140 | 9551 | 9637 | 9400 | 9699 | 8806 |
| PCT (121°C/ 100%rel.hum./ 3 days) | Dehnung (Bruch) / % | T0* | 3,1 | 3,08 | 2,4 | 2,27 | 1,61 | 1,95 | 1,16 | 2,36 |
| | | T3* | 1,3 | 2,3 | 0,7 | 1,43 | 0,67 | 0,56 | 0,4 | 0,58 |
| | Retention (Bruch) nach 3 Tagen / % | | 42 | 75 | 29 | 63 | 42 | 29 | 34 | 25 |
| | Zugfestigkeit (Bruch) / N/mm2 | T0* | 121 | 133 | 105 | 111 | 102 | 106 | 90 | 102 |
| | | T3* | 70 | 114 | 53 | 79 | 54 | 48 | 38 | 44 |
| | E-Modul (Mpa) | T0* | 8364 | 8925 | 9851 | 10029 | 10272 | 9976 | 10377 | 9377 |
| | | T3* | 7609 | 8050 | 8724 | 8866 | 9368 | 9118 | 9301 | 8430 |

| | | | | | | | | | | |
|---|---|---|---|---|---|---|---|---|---|---|
| *0= spritzfrisch, *3= nach 3 Tagen Lagerung im Laborautoklaven PCT (121°C, 1 barÜ), *40= nach 40 Tagen Klimaschrank bei 85°C und 85% relativer Luftfeuchtigkeit | | | | | | | | | | |

Die Tabelle 2 zeigt, dass unter Verwendung von DepAl, MC, Glasfaser, sterisch gehinderten Phenolen, hochmolekularem Carbodiimid und Gleitmitteln flammwidrige und hydrolysestabile PBT Compounds hergestellt werden können. Die UL94 Brandklassen verbessern sich durch den Zusatz an polymeren Carbodiimid. Nach 40 Tagen Lagerung im Klimaschrank bei 85°C und 85% relativer Luftfeuchtigkeit ist bei dem erfindungsgemäßen, flammwidrigen Polyester noch eine Bruchdehnung von 88 % erhalten. Diese Bruchdehnung ist weitestgehend vergleichbar mit der Lagerung des flammwidrigen Polyesters für 2 bis 3 Tage im Autoklav bei 121°C und 1 barÜ. Der Autoklav kann so mit den PCT-Bedingungen als Hydrolyseschnelltest betrachtet werden. Bei Compoundierung wurde keine Druckerhöhung, keine Gas- bzw. Geruchbildung beobachtet.

**Tabelle 3: PBT GF 25 V-0 Compounds mit und ohne Hydrolyseschutz. Zugversuch vor und nach Lagerung bei 121°C im Autoklaven für 3 Tage, B4-7 sind erfindungsgemäße Beispiele, V4 wurde zum Vergleich nochmal compoundiert**

| | | V4 | B4 | B5 | V9 | B6 | B7 |
|---|---|---|---|---|---|---|---|
| PBT | | 54,4 | 53,4 | 53,4 | 53,7 | 53,4 | 53,4 |
| Glasfaser | | 25 | 25 | 25 | 25 | 25 | 25 |
| DepAl | | 13,3 | 13,3 | 13,3 | 13,3 | 13,3 | 13,3 |
| MC | | 6,7 | 6,7 | 6,7 | 6,7 | 6,7 | 6,7 |
| Licowax E | | 0,3 | 0,3 | 0,3 | 0,3 | 0,3 | 0,3 |
| Stabaxol P Mw=3000 | | | 1 | | | | |
| Stabaxol P100 Mw=15000 | | | | 1 | 1 | | |
| Stabaxol P110 Mw=3000 | | | | | | 1 | |
| Stabaxol PLF Mw=4000 | | | | | | | 1 |
| Irganox^{®} 1010 | | 0,3 | 0,3 | 0,3 | 0 | 0,3 | 0,3 |

| UL94 0,8 mm | | V-0 | V-0 | V-0 | V-0 | V-2 | V-0 |
|---|---|---|---|---|---|---|---|
| Dehnung (Bruch) / % | T0* | 2,4 | 2,16 | 2,22 | 2,22 | 1,99 | 2,09 |
| | T3* | 0,7 | 1,72 | 1,84 | 1,65 | 1,53 | 1,78 |
| Retention (Bruch) nach 3 Tagen* / % | | 29 | 80 | 83 | 74 | 77 | 85 |
| Zugfestigkeit (Bruch) / N/mm² | T0* | 105 | 105 | 108 | 108 | 107 | 104 |
| | T3* | 53 | 85 | 86 | 79 | 82 | 84 |
| E-Modul (Mpa) | T0* | 9851 | 10269 | 10332 | 10291 | 10064 | 10224 |
| | T3* | 8724 | 8987 | 8980 | 8876 | 8693 | 8938 |

| | | | | | | | |
|---|---|---|---|---|---|---|---|
| *0= spritzfrisch, *3= nach 3 Tagen Lagerung im Laborautoklaven PCT (121°C 1 barÜ) | | | | | | | |

Die Tabelle 3 zeigt, dass unter Verwendung von DepAl, MC, Glasfaser, sterisch gehinderten Phenolen, Carbodiimiden mit unterschiedlichen Molekulargewichten und Gleitmitteln flammwidrige thermoplastische Polyester hergestellt werden können, wobei die höchsten Retentionen mit den Carbodiimiden mit Molekulargewichten >3000 g/mol erreicht wurden. Die UL94 Brandklassen bleiben durch den Zusatz an Carbodiimid, sterisch gehindertem Phenol und Gleitmittel erhalten bzw. verbessern sich entscheidend. Nach 3 Tagen Lagerung im Autoklav bei 121°C und 1barÜ wurden bei flammwidrigen Polyestern, die zusätzlich noch Carbodiimid enthalten Bruchdehnungen von nahezu 80 % erhalten. Bei der Compoundierung wurde keine Druckerhöhung, keine Gas- bzw. Geruchbildung beobachtet.

**Tabelle 4: PBT GF25 V-0 Compounds mit und ohne Hydrolyseschutz. Zugversuch spritzfrisch vor und nach Lagerung bei 121°C im Autoklaven für 3 Tage, B8 ist ein erfindungsgemäßes Beispiel**

| | | V4 | V10 | B8 |
|---|---|---|---|---|
| PBT | | 54,4 | 54,4 | 53,4 |
| Glasfaser | | 25 | 25 | 25 |
| DepAl | | 13,3 | 13,3 | 13,3 |
| MC | | 6,7 | | |
| Melem | | | 6,7 | 6,7 |
| Licowax E | | 0,3 | 0,3 | 0,3 |
| Lubio AS3 | | | | 1 |
| Irganox^{®} 1010 | | 0,3 | 0,3 | 0,3 |
| UL94 0,8 mm | | V-0 | V-0 | V-0 |
| NBZ/s | | 47 | 34 | 30 |
| Dehnung (Bruch) / % | T0* | 2,4 | 2,21 | 2,22 |
| | T3* | 0,7 | 0,46 | 1,26 |
| Retention (Bruch) nach 3 Tagen* / % | | 29 | 21 | 57 |
| Zugfestigkeit (Bruch) / N/mm² | T0* | 105 | 104 | 110 |
| | T3* | 53 | 39 | 78 |
| E-Modul (Mpa) | T0* | 9851 | 9597 | 9813 |
| | T3* | 8724 | 8941 | 9273 |

| | | | | |
|---|---|---|---|---|
| *0= spritzfrisch, *3= nach 3 Tagen Lagerung im Laborautoklaven PCT (121°C 1 barÜ) | | | | |

Die Tabelle 4 zeigt, dass unter Verwendung von DepAl, Melem, Glasfaser, sterisch gehindertem Phenolen, hochmolekularem Carbodiimid und Gleitmittel flammwidrige thermoplastische Polyester hergestellt werden können. Die UL94 Brandklassen bleiben durch den Zusatz an Carbodiimid, sterisch gehindertem Phenol und Gleitmittel erhalten. Nach 3 Tagen Lagerung im Autoklav bei 121°C und 1barÜ sind bei flammwidrigen Polyestern, die zusätzlich Carbodiimid und sterisch gehinderte Phenole beinhalten, noch Bruchdehnungen von nahezu 60 % erhalten. Bei der Compoundierung wurde keine Druckerhöhung, keine Gas- bzw. Geruchbildung beobachtet.

### Beispiele Polyamid 6

**Tabelle 5: PA6GF30: Dehnung spritzfrisch und nach 4 Tagen Pressure Cooker Test (121°C, 1 barÜ). B9 ist ein erfindungsgemäßes Beispiel**

| | | V11 | V12 | B9 |
|---|---|---|---|---|
| PA 6 | | 69,7 | 49,7 | 49,2 |
| Glasfaser | | 30 | 30 | 30 |
| Exolit OP 1400 (TP) | | | 20 | 20 |
| Lubio AS 18 | | | | 0,5 |
| Irganox^{®} 245 | | 0,3 | 0,3 | 0,3 |
| UL94 0,8 mm | | n.k. | V-0 | V-0 |
| Dehnung (Bruch) / % | T0 | 4,7 | 3,4 | 3,4 |
| | T1* | 8,4 | 6,7 | 7,4 |
| | T4* | 7,3 | 4,8 | 5,7 |
| Retention (Bruch) nach 4 Tagen im Vergleich zu Tag 1 (Sättigung)* / % | | 87 | 71 | 77 |
| Zugfestigkeit (Bruch) / N/mm² | T0 | 161 | 136 | 131 |
| | T4* | 90 | 71 | 68 |
| E-Modul (Mpa) | T0 | 9001 | 10843 | 10683 |
| | T4* | 3952 | 5273 | 5000 |

| | | | | |
|---|---|---|---|---|
| *0= spritzfrisch, *1 bzw. 4= nach 1 bzw. 4 Tagen Lagerung im Laborautoklaven PCT (121°C 1 barÜ) | | | | |

Die Tabelle 5 zeigt, dass unter Verwendung von Exolit OP 1400, Glasfaser, sterisch gehinderten Pheolen, polymerem Carbodiimid und Gleitmittel flammwidrige thermoplastische Polyamide hergestellt werden können. Die UL94 Brandklassen bleiben durch den Zusatz an polymerem Carbodiimid, sterisch gehindertem Phenol und Gleitmittel weitestgehend erhalten. Nach 4 Tagen Lagerung im Autoklav bei 121°C und 1 barÜ (PCT) ist noch eine Bruchdehung von 77 % erhalten. Es ist hierbei zu beachten, dass der Nullwert der Dehnung an Tag 1 nach Wasserlagerung genommen wurde, da sich nach 24 Stunden erst eine Sättigung einstellt. Bei Compoundierung wurde keine Druckerhöhung, keine Gas- bzw. Geruchbildung beobachtet.

### Beispiele TPU

**Tabelle 6: TPU V-0 Compounds mit und ohne Hydrolyseschutz. Zugfestigkeit vor und nach Lagerung bei 85°C in Wasser für 7 Tage. B10 und B11 sind erfindungsgemäße Beispiele**

| | V13 | V14 | B10 | V15 | B11 |
|---|---|---|---|---|---|
| TPU | 99,7 | 84,5 | 83,5 | 69,5 | 69,0 |
| DepAl | | 15 | 15 | 15 | 15 |
| MC | | | | 15 | 15 |
| Lubio AS 3 | | | 1 | | 0,5 |
| Irganox^{®} 1330 | 0,3 | 0,3 | 0,3 | 0,3 | 0,3 |
| Licowax E | | 0,2 | 0,2 | 0,2 | 0,2 |
| Zugfestigkeit / N/mm² | 44,0 | 21,3 | 21,7 | 11,4 | 12,4 |
| Zugfst. nach 7 d* | 33,5 | 15,6 | 17,5 | 8,7 | 10,0 |
| Retention / % | 81 | 73 | 81 | 73 | 81 |
| UL 94 1,6 mm | verbrannt | V-1 | V-1 | V-0 | V-0 |
| UL 94 1,6 mm nach 7 d* | verbrannt. | V-2 | V-1 | V-1 | V-0 |

| | | | | | |
|---|---|---|---|---|---|
| *nach 7 Tagen Lagerung in Wasser bei 85°C | | | | | |

Die Tabelle 6 zeigt, dass unter Verwendung von Depal, MC, sterisch gehinderten Phenolen, hochmolekularem Carbodiimid und Gleitmittel flammwidrige thermoplastische Polyurethane erhalten werden können, die nach sieben Tagen Wasserlagerung bei 85°C noch über 80% Erhalt der Zugfestigkeit aufweisen. Bei der Compoundierung wird keine Gasbildung beobachtet, kein Geruch, und die Probekörper zeigen keine Verfärbungen. Die UL 94 Brandklassen bleiben durch den Zusatz der hochmolekularen Carbodiimide, der sterisch gehinderten Phenole und der Gleitmittel erhalten, während ohne Carbodiimid Zusatz eine Verschlechterung der Brandklasse beobachtet wird.

## Patentansprüche

1. Mischungen enthaltend
- als Komponente A 5 bis 95 Gew.-% eines Phosphinsäuresalzes der Formel (V), eines Diphosphinsäuresalzes der Formel (VI), deren Polymere oder Gemischen von zwei oder mehreren davon, 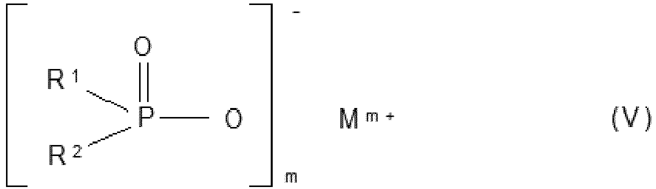 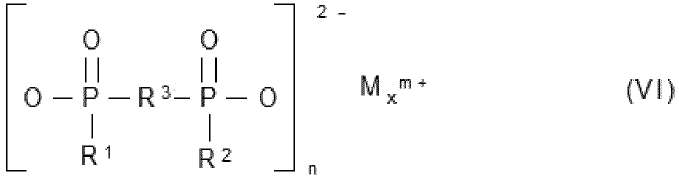 worin
R¹, R² gleich oder verschieden sind und H oder C₁-C₆-Alkyl, linear oder verzweigt und/oder Aryl bedeuten,
R³ C₁-C₁₀-Alkylen, linear oder verzweigt, C₆-C₁₀-Arylen, -Alkylarylen oder -Arylalkylen bedeutet,
M H, Mg, Ca, Al, Sb, Sn, Ge, Ti, Fe, Zn, Zr, Ce, Bi, Sr, Mn, Li, Na, K und/oder eine protonierte Stickstoffbase ist,
m 1 bis 4 ist,
n 1 bis 4 ist, und
x 1 bis 4 bedeutet,
- als Komponente B 0,5 bis 20 Gew.-% einer polymeren Carbodiimidverbindung oder Gemischen davon,
- als Komponente C 0 bis 20 Gew.-% eines sterisch gehinderten Phenols oder Gemischen davon,
- als Komponente D 0 bis 20 Gew.-% eines organischen Phosphits und/oder organischen Phosphonits oder Gemischen davon,
- als Komponente E 0 bis 50 Gew.-% eines Melaminsalzes, eines Kondensations-produktes von Melamin oder Umsetzungsprodukte von Melamin mit Phosphorsäure und/oder kondensierten Phosphorsäuren bzw. Umsetzungsprodukte von Kondensationsprodukten des Melamins mit Phosphorsäure und/oder kondensierten Phosphorsäuren und/oder sowie Gemische der genannten Produkte und/oder ein anderes stickstoffhaltiges Flammschutzmittel als die vorgenannten;
- als Komponente F 0 bis 90 Gew.-% eines Füll- oder Verstärkungsstoffes oder Gemischen davon,
- als Komponente G 0 bis 40 Gew.-% eines Gleit- und/oder Entformungsmittels oder Gemischen davon,
- als Komponente H 0 bis 40 Gew.-% weiterer Additive, die sich von Komponenten A bis G unterscheiden,
wobei die Summe der Gewichtskomponenten 100 Gew.-% ergibt, mit der Maßgabe, dass die Mischungen neben den Komponenten A und B mindestens zwei der Komponenten C, D und/oder G enthalten.

2. Mischungen nach Anspruch 1, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

3. Mischungen nach mindestens einem der Ansprüche 1 oder 2, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen bedeutet.

4. Mischungen nach mindestens einem der Ansprüche 1 bis 3, **dadurch gekennzeichnet, dass** polymere -N=C=N- enthaltende Verbindungen der Komponente B Verbindungen der allgemeinen Formeln (II) oder (III) sind 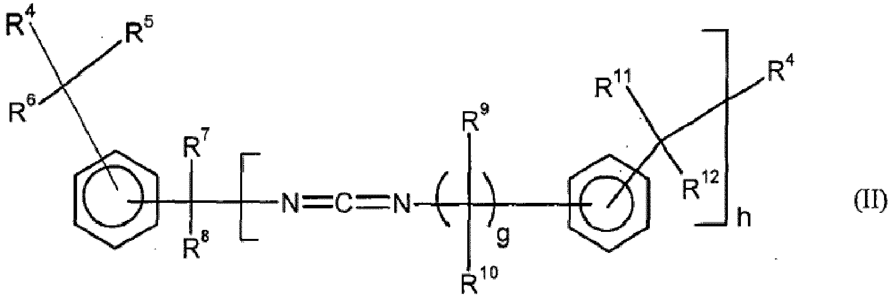 wobei
R⁴ für NCO steht,
R⁵, R⁶, R⁷, R⁸, R⁹, R¹⁰, R¹¹ und R¹² unabhängig voneinander für Wasserstoff-, oder für einen Rest der Reihe C₁- bis C₁₀-Alkyl-, C₆- bis C₁₂-Aryl-, C₇- bis C₁₃-Aralkyl- oder C₇- bis C₁₃-Alkylaryl stehen,
g für eine ganze Zahl von 0 bis 5 steht,
h für eine ganze Zahl von 2 bis 100 steht; 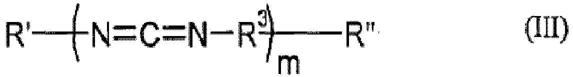
wobei in Formel (III)
m für eine ganze Zahl von 2 bis 5000, bevorzugt für eine ganze Zahl von 2 bis 500 steht,
R3 einen Arylenrest, vorzugsweise einen 4,4'-Methylen-bis-(2,6-dialkylphenyl)-rest bedeutet, der in mindestens einer Orthostellung, bevorzugt in beiden Orthostellungen zu dem aromatischen Kohlenstoffatom, das die -N=C=N-Gruppe trägt, aliphatische und/oder cycloaliphatische Substituenten mit mindestens 2 C-Atomen, bevorzugt verzweigte oder cyclische aliphatische Reste mit mindestens 3 C-Atomen trägt,
R' Aryl, Aralkyl, Aryl-NCO oder Aralkyl-NCO bedeutet und
R" -N=C=N-Aryl, -N=C=N-Aralkyl oder -NCO bedeutet.

5. Mischungen nach Anspruch 4, **dadurch gekennzeichnet, dass** als Komponente B N=C=N- enthaltende Verbindungen der Formeln (IV) oder (V) eingesetzt werden 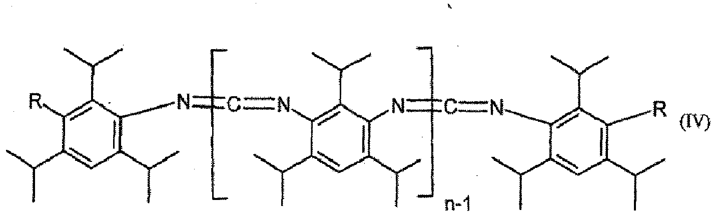 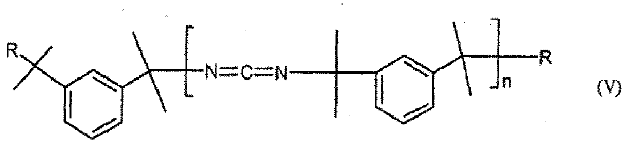 mit
R = NCO
bei denen
n für eine ganze Zahl von 2 bis 200 steht.

6. Mischungen nach mindestens einem der Ansprüche 1 bis 5, **dadurch gekennzeichnet, dass** Komponente C ausgewählt wird aus der Gruppe bestehend aus alkylierten Monophenolen, sterisch gehinderten Alkylthiomethylphenolen, sterisch gehinderten hydroxylierten Thiodiphenylethern, sterisch gehinderte Alkyliden-Bisphenolen, sterisch gehinderten Benzylphenolen, sterisch gehinderten hydroxybenzylierten Malonaten, sterisch gehinderten Hydroxybenzyl-Aromaten, sterisch gehinderten phenolischen Triazinverbindungen, sterisch gehinderten phenolischen Benzylphosphonaten, N-(3,5-di-tert-butyl-4-hydroxyphenyl)-carbaminsäurealkylester, Estern der β-(3.5-Di-tert-butyl-4-hydroxyphenyl)-propionsäure mit ein- oder mehr-wertigen Alkoholen, Estern der β-(5-tert-Butyl-4-hydroxy-3-methylphenyl)-propionsäure mit ein- oder mehrwertigen Alkoholen, Estern der β-(3,5-Dicyclohexyl-4-hydroxyphenyl)-propionsäure mit ein- oder mehr-wertigen Alkoholen, Estern der 3,5-Di-tert-butyl-4-hydroxyphenylessigsäure mit ein- oder mehrwertigen Alkoholen, Amiden der β-(3,5-Di-tert-butyl-4-hydroxyphenyl)-propionsäure und Gemischen von zwei oder mehreren davon.

7. Mischungen nach mindestens einem der Ansprüche 1 bis 6, **dadurch gekennzeichnet, dass** Komponente D ausgewählt wird aus der Gruppe bestehend aus organischen Phosphiten der allgemeine Formel P(OR)₃, worin R einwertige organische Reste sind, organische Phosphonite der allgemeinen Formel PR'(OR)₂, worin R und R' einwertige organische Reste sind.

8. Mischungen nach mindestens einem der Ansprüche 1 bis 7, **dadurch gekennzeichnet, dass** Komponente E ausgewählt wird aus der Gruppe bestehend aus Melaminpolyphosphat mit einem mittleren Kondensationsgrad von größer gleich 20, Melamincyanuarat, Melaminphosphat, Dimelaminphosphat, Melaminpyrophosphat, Melaminpolyphosphaten, Melampolyphosphaten, Melempolyphosphaten und/oder Melonpolyphosphaten.

9. Mischungen nach mindestens einem der Ansprüche 1 bis 8, **dadurch gekennzeichnet, dass** Komponente F ausgewählt wird aus der Gruppe bestehend aus mineralischen teilchenförmigen Füllstoffen auf der Basis von Talk, Glimmer, Silikat, Quarz, Titandioxid, Wollastonit, Kaolin, amorphen Kieselsäuren, Magnesiumcarbonat, Kreide, Feldspat und/oder Bariumsulfat und/oder Glasfasern.

10. Mischungen nach mindestens einem der Ansprüche 1 bis 9, **dadurch gekennzeichnet, dass** Komponente G ausgewählt wird aus der Gruppe bestehend aus langkettigen Fettsäuren, deren Salzen, deren Esterderivaten und/oder Amid Derivaten, Montanwachsen und/oder niedermolekularen Polyethylen- und/oder Polypropylenwachsen.

11. Zusammensetzungen enthaltend neben den Mischungen nach mindestens einem der Ansprüche 1 bis 10 als weitere Komponenten I ein thermoplastisches Polymer oder eine Mischung davon, vorzugsweise thermoplastische Polyester, thermoplastische Polyamide, thermoplastische Polyurethane, thermoplastisch-elastomere Polyester, thermoplastisch-elastomere Polyamide und/oder thermoplastisch-elastomere Polyurethane.

12. Zusammensetzungen nach Anspruch 11, **dadurch gekennzeichnet, dass** diese 40 bis 94,9 Gew.-% Komponente I, 10 bis 20 Gew.-% Komponente A, 0,3 bis 3 Gew.-% Komponente B, 0 bis 3 Gew.-% Komponente C, 0 bis 10 Gew.-% Komponente D, 0 bis 10 Gew.-% Komponente E, 15 bis 35 Gew.-% Komponente F, 0 bis 2 Gew.-% Komponente G und 0 bis 2 Gew.-% Komponente H enthalten, wobei die Summe der Gewichtskomponenten 100 Gew.-% ergibt und wobei mindestens zwei der Komponenten C, D und/oder G anwesend sein müssen.

13. Zusammensetzungen nach mindestens einem der Ansprüche 11 bis 12, **dadurch gekennzeichnet, dass** es sich bei Komponente E um Melamincyanurat, Melaminpolyphosphat oder Melem oder Mischungen dieser Komponenten handelt

14. Zusammensetzungen nach mindestens einem der Ansprüche 11 bis 13, **dadurch gekennzeichnet, dass** es sich bei der Komponente F um mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat und/oder Bariumsulfat und/oder Glasfasern handelt.

15. Zusammensetzungen nach Anspruch 14, **dadurch gekennzeichnet, dass** es sich bei der Komponente F um Glasfasern handelt

16. Zusammensetzungen nach mindestens einem der Ansprüche 11 bis 15, **dadurch gekennzeichnet, dass** es sich bei der Komponente I um PBT oder um thermoplastisch-elastomere Polyester handelt.

17. Zusammensetzungen nach mindestens einem der Ansprüche 11 bis 16, **dadurch gekennzeichnet, dass** es sich bei der Komponente G um langkettige Fettsäuren, deren Salze, deren Esterderivate und/oder Am idderivate, Montanwachse und/oder niedermolekulare Polyethylen- und/oder Polypropylenwachse handelt.

18. Verfahren zur Herstellung von hydrolysebeständigen und flammwidrigen Polymercompounds, **dadurch gekennzeichnet, dass** man die Komponenten A bis I nach mindestens einem der Ansprüche 1 bis 17 in den genannten Gewichtsanteilen durch Schmelzextrusion vermischt.

19. Fasern, Folien, Formkörper und Formteile aus hydrolysebeständigen und flammwidrigen Polymercompounds nach mindestens einem der Ansprüche 11 bis 17.

20. Verwendung von Fasern, Folien und Formkörper aus hydrolysebeständigen und flammwidrigen Polymercompounds nach mindestens einem der Ansprüche 11 bis 17 in Steckern, Schaltern, Kondensatoren, Isolationssystemen, Lampensockeln, Spulenkörpern, Gehäusen, Steuerungen und anderen Gegenständen.

21. Verwendung von Fasern, Folien, Formkörpern und Formteilen aus hydrolysebeständigen und flammwidrigen Polymercompounds nach mindestens einem der Ansprüche 11 bis 17 im Haushalt, in der Industrie, in der Medizin, in Kraftfahrzeugen, in Flugzeugen, in Schiffen, in Raumschiffen sowie in anderen Fortbewegungsmitteln, in Büroausstattungen sowie in weiteren Gegenständen und Gebäuden.
